# EUROPEAN PATENT APPLICATION

(11) **EP 4 521 708 A1**
(43) Date of publication of application: **12.03.2025**
(21) Application number: 23196388.5
(22) Date of filing: 08.09.2023
(51) Int. Cl.: H04L 47/28, H04L 47/32, H04L 49/90

(54) **TRANSMISSION BUFFERING**

(71) Applicant: Nokia Solutions and Networks Oy, 02610 Espoo (FI)
(72) Inventor: Maes, Jochen, 2018 Antwerp (BE); Fredricx, Francois, 2018 Antwerp (BE); Rams, Tomasz, 31-510 Krakow (PL)
(74) Representative: Auger, Hannah Maria

(57) **Abstract**

Disclosed herein is an apparatus with means for receiving, at the apparatus, a plurality of packets of information to be transmitted from the apparatus to a node, means for generating at least one queue of the plurality of packets of information to be transported to the node, and means for discarding at least one packet from the queue at a specific time and/or based on a timing characteristic of the at least one packet to be discarded.

## Description

### Field

Example embodiments may relate to apparatuses, methods and/or computer programs for managing packets of information in a queue. In particular, the example embodiments may relate to managing packets of information in the transmit buffer of an apparatus such as a transport unit like an Optical Network Unit (ONU) of a Passive Optical Network (PON) system.

### Background

Packets of information are transported from an apparatus to a node. Known methods of transporting packeting of information may include buffering the packets of information at an apparatus until such time as they are ready to be sent to a node. Packets of information may be added to a First In First Out (FIFO) buffer until such time until the buffer capacity has been reached. At such a time, the buffer cannot hold further packets that arrive at the buffer, therefore, the further packets are dropped. This packet loss leads to a reduction in a quality of communication. Packet loss is not the only metric that affects the quality of communication. A latency of transmitted packets also affects the quality of communication for (quasi) real-time traffic. Packets that have been buffered for too long in the queue awaiting transmission will also unnecessarily delay subsequent packets in the queue.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising: means for receiving, at the apparatus, a plurality of packets of information to be transmitted from the apparatus to a node, means for generating at least one queue of the plurality of packets of information to be transported to the node, and means for discarding at least one packet from the queue at a specific time and/or based on a timing characteristic of the at least one packet to be discarded.

The apparatus may further comprise means for receiving, at the apparatus from the node, a request to initiate the discarding of the at least one packet from the queue.

The apparatus may further comprise a means to be configured with criteria on when to clear packets and how to select which packets to clear without needing to receive an explicit request from the node.

The apparatus may further comprise means for transmitting, to the node from the apparatus, a status report on the queue.

According to a second aspect, there is described a node comprising: means for scheduling the transmission of a plurality of packets of information from an apparatus to the node, the apparatus having a queue of the plurality of packets of information to be transported to the node, and means for transmitting, from a node to the apparatus, a request to initiate discarding of at least one packet of information from the queue at a specific time and/or based on a timing characteristic of the at least one packet to be discarded.

In some embodiments, all of the plurality of packets of information may be discarded from the queue.

In some embodiments, each of the packets of information in the queue may be associated with a lifetime parameter, T_{life}, the lifetime parameter indicating the duration since each packet of information was received by the apparatus. The at least one packet to be discarded may have a lifetime parameter greater than a predetermined maximum lifetime, Tₘₐₓ. Tmax, may be determined based on processing and buffering capabilities of the apparatus and node, or by other devices in the end-to-end system or based on services and applications for which the packets of information are used.

In some embodiments, each packet of information in the queue may be associated with an ingress timestamp parameter, T_{ingress}, indicating the absolute time at which the packet of information was received by the apparatus. The at least one packet to be discarded may have an ingress timestamp parameter earlier than a predetermined limit ingress time, Tₗᵢₘᵢₜ.

In some embodiments, the apparatus may comprise an optical network unit, ONU and the node may comprise an optical line terminal, OLT.

In some embodiments, the request may comprise the predetermined maximum lifetime, Tₘₐₓ, or the predetermined limit ingress time, Tₗᵢₘᵢₜ.

In some embodiments, the request may comprise a command to execute the discarding of the at least one packet from the queue at one of the following times:
Immediately, at an absolute time, at time duration after the request is received by the apparatus, or at some event detected by the apparatus.

In some embodiments, the request may comprise a command to execute the discarding of the at least one packet from the queue upon the identification, by the apparatus or node, of a reference event.

The node may further comprise means for receiving from a second node a secondary command, wherein the secondary command message comprises a protocol message comprising at least one of the following: at an absolute time at which to discard the at least one packet from the queue, the predetermined maximum lifetime, Tₘₐₓ, or the predetermined limit ingress time, Tₗᵢₘᵢₜ.

According to a third aspect, there is described a method. The method comprises receiving, at an apparatus, a plurality of packets of information to be transmitted from the apparatus to a node. The method further comprises generating at least one queue of the plurality of packets of information to be transported to the node. The method further comprises discarding at least one packet from the queue at a specific time and/or based on a timing characteristic of the at least one packet to be discarded.

According to a fourth aspect, there is described a method. The method comprises scheduling the transmission of a plurality of packets of information from an apparatus to a node, the apparatus having a queue of the plurality of packets of information to be transported to the node. The method further comprises transmitting, from a node to the apparatus, a request to initiate discarding of at least one packet of information from the queue at a specific time and/or based on a timing characteristic of the at least one packet to be discarded.

### Brief Description of the Drawings

Example embodiments will now be described by way of non-limiting example, with reference to the accompanying drawings, in which:
Fig. 1 shows, by way of example, a network configuration comprising an apparatus and a node.
Fig. 2 shows, by way of example, a network configuration.
Fig. 3 shows, by way of example, a network configuration.
Fig. 4 shows, by way of example, a first graph demonstrating buffer communication.
Fig.5 shows, by way of example, a second graph demonstrating buffer communication.
Fig. 6 shows, by way of example, a third graph demonstrating buffer communication.
Fig. 7 shows, by way of example, a fourth graph demonstrating buffer communication.
Fig.8 shows, by way of example, a flowchart of a method.
Fig. 9 shows, by way of example, a flowchart of a method.
Fig. 10 shows, by way of example, a block diagram of an apparatus.

### Detailed Description

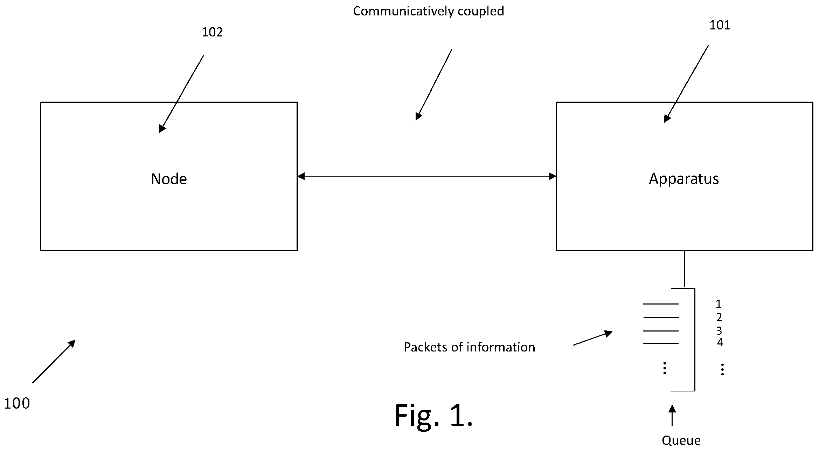

Figure 1 shows a network configuration 100 comprising an apparatus 101 and a node 102. The node 102 may be an optical line termination (OLT). The network configuration may comprise a passive optical network (PON). The apparatus 101 may be an optical network unit (ONU). The apparatus 101 and the node 102 are communicatively coupled such that packets of information can be transmitted and received by both the apparatus 101 and the node 102. Information packets arriving at the apparatus 101 for transmittal to node 102 are stored in a buffer queue at the apparatus 101 until such time as they can be sent to the node 102. The term queue is generally used to indicate a series of packets of information that are awaiting transfer from the apparatus. The terms queue and buffer may be used interchangeably throughout the disclosure herein. Information packets are generally transmitted from the apparatus 101 based on the order they arrived at the apparatus 101, with the earliest arriving packets being transmitted first. The order of packets of information in the queue may be determined based on the order at which they arrived at the apparatus 101.

Example embodiments may relate to apparatuses, methods and/or computer programs for improving the management of packets in the transmit buffer of an apparatus such as an optical network unit (ONU).

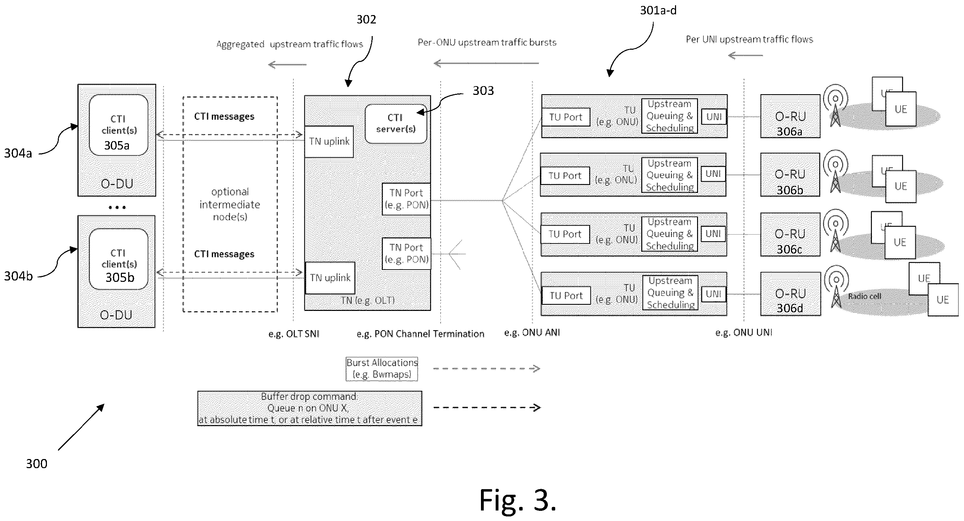

A passive optical network (PON) is a type of fiber-optic access network. A PON may include a transport node (which may be referred to as a node herein) such as an optical line terminal (OLT) at a central office (CO) and a number of apparatus which are transport units such as optical network units (ONUs), also known as optical network terminals (ONTs), located at or near subscribers' premises (e.g., home, office building, etc.). An OLT can consist of one or multiple ports, each port serving a Passive Optical Network to which one or multiple ONUs can be connected. In Time Domain Multiplexed (TDM) - based PON systems, the common bandwidth in upstream and downstream directions of the PON medium is shared amongst the multiple ONUs. In the upstream direction (from ONUs to OLT) transmission is done by means of an OLT-based scheduler called Dynamic Bandwidth Assignment (DBA), which determines when each ONU is allowed to transmit packets in the upstream direction. One such on/off transmission period from a given ONU is called a burst. Each burst is precisely timed by the OLT-based scheduler so as to avoid collisions between bursts at the OLT port receiver. PON may be used for transport other than residential access. In the example of mobile transport, an OLT may be located near a mobile distributed unit (DU) and an ONU may be located near a cell site. The PON network then provides a path for latency-sensitive mobile fronthaul traffic between RUs and DUs (Figure 3).

A packet in this context is a formatted unit of data carried by a packet-switched network. A packet consists of control information (or header) and user data (or payload). Control information provides data for delivering the payload (e.g., source and destination network addresses, error detection codes, or sequencing information). During operation of a PON, a continuous data stream made up of packets of information may be transmitted downstream from an OLT to various ONUs, or transmitted upstream from various ONUs to the OLT. Various scenarios can lead to a temporary inability to open an uplink fronthaul path from a radio unit (RU) connected to the ONU to a distributed unit (DU) connected to the OLT. As a result of the inability to timely open the uplink fronthaul path and thus transmit upstream via the ONUs to the OLT, fronthaul packets will be placed in buffer queues at the ONUs and will be sent at a later time, with delays. When the fronthaul path is opened again, the oldest fronthaul packets will be transmitted first, even though they have a higher probability of being transmitted too late for timely processing at the DU than the other packets in the queues. Furthermore, other fronthaul packets that have been added to the buffer queues while the oldest fronthaul packets are being transmitted will consequently be delayed too, leading to an increased risk that they will also arrive too late at the DU. Such issues can lead to the degradation of services making use of the network.

Although the disclosure here may be the context of mobile fronthaul, the provided subject matter may be applicable for any latency sensitive application that makes use of the principle of coordinated scheduling in upstream PON. One such coordinated scheduling approach is based on a cooperative transport interface (CTI) as defined at the Open RAN (O-RAN) alliance, and known at the International Telecommunications Union as Cooperative Dynamic Bandwidth Assignment (CO DBA). CO DBA (see ITU-T G.Sup71 'Optical line termination capabilities for supporting cooperative dynamic bandwidth assignment') is a variant of the DBA scheduler whereby the node is informed by a service in advance about a future upstream traffic volume to be expected from a given equipment connected to a given ONU. This allows CO DBA to foresee individual bandwidth assignments to the ONUs without having to detect their needs after the fact. It also allows the OLT to foresee when upstream congestion could occur on a given PON (when the sum of the demands exceed the PON capacity). Furthermore, although the following discussion may be in the context of PON technology, the described subject matter is applicable to other shared medium technologies such as, for example, Data Over Cable Service Interface Specification (DOCSIS). Like PON, also DOCSIS makes use of the O-RAN defined CTI protocol. More generically, coordinated scheduling may be achieved between any service or application that needs to transport packets between the apparatus and the node. Those services may include low latency services such as cloud gaming, smart grid, and factory automation. While those services may use a proprietary or standardized interface that differs from the Cooperative Transport Interface as defined in O-RAN, we will still refer to these control interfaces collectively as cooperative transport interfaces as the generic term.

A cooperative transport interface (CTI) client in a distributed unit (DU) may open a uplink fronthaul path from a radio unit (RU) to a DU by encoding information such as start time, duration, and volume of traffic in a CTI message that is interpreted by a CTI server in a PON OLT and used by a corresponding CO DBA scheduler.. However, this does not solve issues resulting from an inability to open the fronthaul path due to resource constraints on the PON or due to excess fronthaul traffic. Examples scenarios wherein the fronthaul path cannot be opened include when there are quiet windows in the upstream PON due to the ranging of new ONU(s), or when there is temporary congestion due to a re-distribution of a mobile resource between RUs that leads to instantaneous concurrency of PON bandwidth requests from adjacent mobile symbols right before and right after the redistribution.

As a result of the inability to timely open the uplink fronthaul path, fronthaul packets will be buffered at ONUs and thus will be sent at a later time, with delays for those packets and all other packets that have been added to the queues at the ONUs whilst the delayed packets are being sent from the ONUs. As a result, when the fronthaul path is opened again, the oldest fronthaul packets will be transmitted first from the ONUs, even though they are likely to arrive too late for timely processing at the DU. Furthermore, the other fronthaul packets that were delayed by the late transmittal of the previous packets also risk arriving too late at the DU for processing.

Packets arriving at the ONU to be transmitted after the ONU buffer is already filled with packets will be dropped. However, this does not prevent the sending of old packets from the buffer that are no longer useful and thus does not prevent new packets arriving at the buffer queue once space is available for said packets being delayed by the transmittal of redundant packets. Furthermore, the packets arriving at the ONU when the buffer is already saturated are automatically dropped when it still may have been possible to send those packets without them arriving too late at the DU, had there been capacity at the ONU to buffer them. Therefore, there is a desire to provide an improved way of managing the packets of information in the buffer.

The subject matter described herein relates in one aspect to an apparatus 101, for instance an ONU, having means for receiving, at the apparatus 101, a plurality of packets of information to be transmitted from the apparatus to a node 102, for instance an OLT, means for generating at least one queue of the plurality of packets of information to be transported to the node, and means to discard at least one of the information packets from its buffer queue at a specific time and/or based on a timing characteristic of the at least one packet to be discarded.

By discarding at least one information packet from the buffer of the ONU at a specific time and/or based on a timing characteristic of the at least one packet to be discarded, this may ensure that packets that arrive later into the queue are sent at a time in which they can still be valuably processed by the DU. This may be particularly effective when removing old packets before resuming the flow of upstream traffic after a long duration of inactivity e.g. caused by a PON ranging event. In such case, the majority of packets in the queue are likely to be outdated anyway, and are too late to be processed by the service (e.g. a DU). Therefore, removal of the old packets may simply allow the more recent packets in the queue at the ONU to be processed in a more timely fashion and while they are still useful.

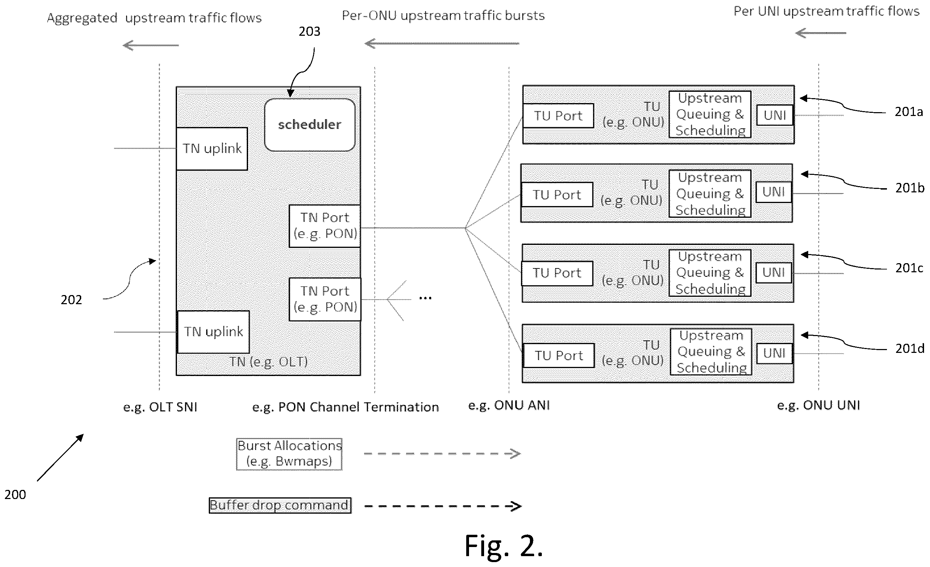

Discarding of the at least one packet of information from the queue or buffer may include deleting the packet of information from the apparatus entirely, storing the packet of information at the apparatus and/or moving the packet of information to a separate queue. Figure 2 depicts a network configuration 200 comprising a transport node 202 communicatively coupled to four transport units, 201a, 201b, 201c, 201d. Such a configuration may be seen in applications such as mobile 5G, wherein a PON acts as the fronthaul link. Traffic sent to each transport unit (201a-d) to be transmitted to transport node 202 is stored in a transmit buffer at each transport unit and is scheduled in a queue for sending to the transport node 202. Each transport unit may comprise one or multiple different transmit buffers. In this example, the transport node comprises a scheduler 203. The scheduler 203 may provide scheduling information to one (or multiple) of the transport units 201a-d to discard information packets in one or multiple of their transmit buffers. This scheduling information may be in the form of a request from a node to initiate the discarding of the at least one packet from a queue of the respective transport unit. The request may comprise information identifying a particular buffer queue in a particular transport unit from which packets are to be discarded.

In some embodiments, the transport unit 201a-d may comprise means for transmitting, to the transport node 202, a status report on the one or more buffer queues in the transport unit 201a-d. The status report may comprise such information as the buffer fill depth and/or at least one timing characteristic of the packets of information contained in the buffer queue. In some embodiments, information in the status report may be used by the transport node 202 to generate the request to discard packets.

In some embodiments, all of the plurality of packets of information are discarded from the queue. This may otherwise be known as flushing the whole buffer. By flushing its buffer, all packets resident in the ONU's transmit queue are dropped. This will ensure that only packets are transmitted that arrive after the flushing is performed. Such flushing instruction is crude but simple. It may be particularly effective to remove old packets before resuming the flow of upstream traffic after a long duration of inactivity e.g. caused by a PON ranging event. In such case, the majority of packets in the queue are likely to be out-dated, and are too late to be processed by the service (e.g. a DU). In such scenarios, flushing of the buffer is useful to reset the apparatus.

Each of the packets of information in the queue may be associated with a timing characteristic such as a lifetime parameter, T_{life}, the lifetime parameter indicating the duration since each packet of information was received by the transport unit 201a-d. The scheduler 203 may instruct a transport unit 201a-201d via the request to drop packets older than a configured maximum lifetime Tₘₐₓ (i.e. T_{life} is greater than T_{Max}). In this case, packets that only recently arrived at the queue are therefore not dropped as their lifetime T_{life} is not long enough and therefore these packets may still have a chance to arrive at a time that they can be processed, e.g. at a DU.

The transport node 202 may receive information indicative of Tₘₐₓ from an application. The application may be remote from the apparatus and node or configured within either the apparatus or node. Different services and/or applications may require different Tₘₐₓ values. The value of Tₘₐₓ may depend on the processing or buffering capabilities of the transport unit 201a-d and the node 202, and may also depend on the propagation delay from a RU connected to a particular transport unit 201a-d to a DU connected to the transport node 202 (which includes the propagation delay over the fiber, the processing and buffering delays in, for instance, the PON ONU (e.g. transport unit 201a-d) and OLT (e.g. transport node 202), and the propagation and processing and buffering delays of other concatenated network segments). The application may have the best view on the observed total delay, and thus may derive, using the available information, a Tₘₐₓ value for each of the transport units 201a-d. Tₘₐₓ may be the same or different for each of the transport units 201a-d. The application can then send this info to the transport node 202 who then instructs the transport units 201a-d. In some implementations, Tₘₐₓ may be based on information received in a status report from the transport unit 201a-d. In other implementations, Tₘₐₓ may be based on requirements of a unit connected to the transport node. The unit is a recipient of the plurality of packets of information. One example of a unit is a distributed unit (DU) for mobile services. This DU may run on dedicated hardware, or may be run as a virtual DU on generic hardware. Another example of a unit is a server running an edge cloud service, e.g. virtual/augmented reality or gaming

In some embodiments, each packet of information in the queue is associated with a timing characteristic such as an ingress timestamp parameter, T_{ingress}, that indicates the absolute time at which the packet of information was received by the transport unit 202, and the at least one packet to be discarded has an ingress timestamp parameter earlier than a predetermined limit ingress time, Tₗᵢₘᵢₜ. In this example, the request to initiate the discarding of the at least one packet from a queue of the respective transport unit may comprise Tₗᵢₘᵢₜ. In some implementations, Tₗᵢₘᵢₜ may be based on information received in a status report from the transport unit 201a-d.. In other implementations, Tₗᵢₘᵢₜ may be based on information received from the service or application, e.g. from the DU in case of a fronthaul service.

In some embodiments, the instruction to drop packets may be to drop packets at a specific time. This may be an absolute time or a particular time duration after the request is received by the apparatus.

The apparatus may be given a request to drop packets upon detection of some event by the apparatus. The event may correspond to temporary congestion of the shared medium (for example, the PON). The shared medium may experience temporary congestion, which can be detected by the transport node 202 scheduler 203 or deduced from in-advance notifications like CTI messages. This would cause the build-up of upstream packets in some of the transport units 201a-d. Those packets caught in the build-up would be sent at a later transmit opportunity, but then risk arriving too late. By instructing the ONU to drop packets at a specific time, for instance, at a time corresponding to the temporary congestion of the shared medium, these older packets are not sent unnecessarily. In some embodiments, a request by the transport node 202 for the transport unit 201a-d to initiate the discarding of the at least one packet from a queue of the respective transport unit 201a-d may comprise a command to execute the discarding of the at least one packet from the queue upon the identification, by the transport unit 201a-d or by the transport node, of a reference event. The reference event may be detected by the node and, as such, a communication is sent from the node to the apparatus to execute the discarding of at least one packet from the queue. The reference event may correspond to a PON ranging event.

In some embodiments, a request by the transport node 202 for the transport unit 201a-d to initiate the discarding of the at least one packet from a queue of the respective transport unit 201a-d may comprise a command to execute the discarding of the at least one packet from the queue immediately, at an absolute time, at time duration after the request is received by the apparatus, or at some event detected by the apparatus.

In some implementations, a transport node 201a-d may comprise means for receiving from a different transport node a command comprising a protocol message that comprises at least one of at an absolute time at which to discard the at least one packet from the queue, the predetermined maximum lifetime, Tₘₐₓ, the predetermined limit ingress time, Tₗᵢₘᵢₜ.

Figure 3 shows, by way of example, the transport of mobile traffic over a network configuration 300 comprising a transport node 302 and four transport units 301a-d, making optional use of CTI. The network comprises four RUs 306a-d each being connected to a respective transport unit 301a-d. The network further comprises two dUs 304a and 304b, each comprising a CTI client, 305a, 305b, and schedulers for the mobile traffic (not shown on the figure). The DU schedulers determine how much upstream traffic is allocated to the User Equipments (uEs) served by the RUs, and in turn the aggregated traffic generated by each RU 306a-d. Via the network, packets can be sent from the RUs 306a-d to the dUs 304a-b. In this Example, the CTI server 303 may drive the PON scheduler, making use of information contained in CTI messages sent from the dUs 304a-b to allocate bandwidth per ONU, and to determine when the transport units 301a-d should drop packets to avoid the excessive buffering of packets at the transport units 301a-d. Mobile transport is one example use case of such an apparatus and node. The apparatus and node may also apply to cloud gaming, control of industrial automation etc. Multiple services may run concurrently. In the case of concurrent operation, the node may accept CTI messages from each service individually, or the messages may be relayed or preprocessed by an intermediate entity, e.g. by an Software Defined Networking (SDN) controller. Figure 3 shows a CTI message exchange that appears to take the same physical path as the data packet stream. In general, CTI messages may be routed differently. Also in general, the unit 305 containing the CTI client may be disaggregated from the unit 304 receiving the transport packets.

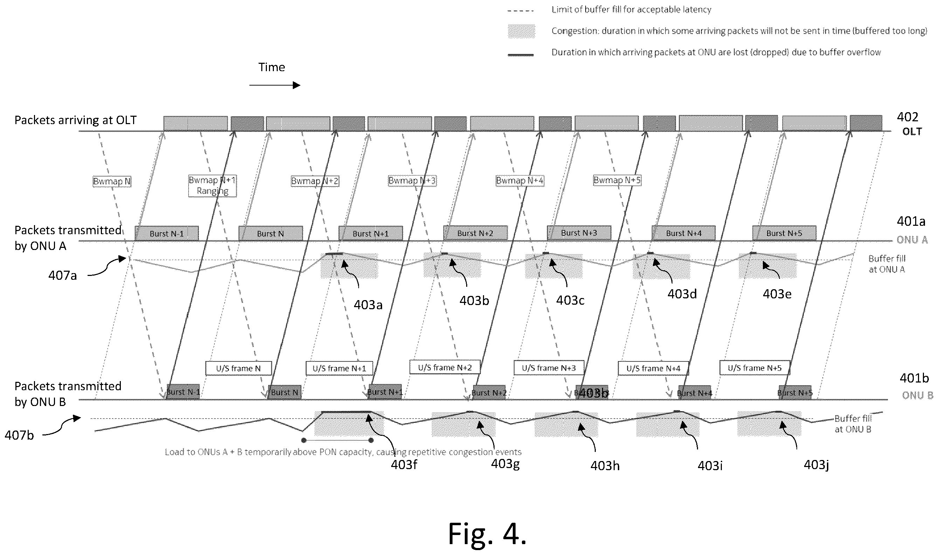

Figure 4 shows, by way of example, a chart showing the effect of temporary upstream congestion in a network, wherein the total traffic to be sent to a transport node (OLT 402) via two transport units (ONU A and ONU B) 401a-b temporarily exceeds the capacity of the network.

Each downstream physical layer (PHY) frame contains a bandwidth map (bWmap) that indicates the location for an upstream transmission by each ONU in the corresponding upstream PHY frame. This Bwmap contains the start time and grant size for each alloc ID that is granted upstream resources. This can be seen in Figure 4 by the sizes of the bursts from ONU 401a and ONU 401b that are being sent to OLT 402

As can be seen from the packets arriving at the OLT 402, the network is at capacity as there is no space to send additional packets inbetween those bursts sent from ONU 401a and ONU 401b. As can be seen from the buffer fill at ONU 401a and ONU 401b, an inability to transmit packets (emptying the buffer) to the OLT 402, has led to the collection of packets in the buffers of ONU 401a and ONU 401b. These packets are sent at a later time when there are sufficient resources available, however, this risks the packets arriving too late for proper processing. As can be seen from Figure 4, on multiple occasions, the build-up of packets has led to the buffers saturating, meaning their fill has exceeded the limit for acceptable latency (see 407a-b). This can even lead to overflow (see 403a-j). Packets arriving during saturation at the ONU 401a or the ONU 402b are then delayed too much or automatically dropped.

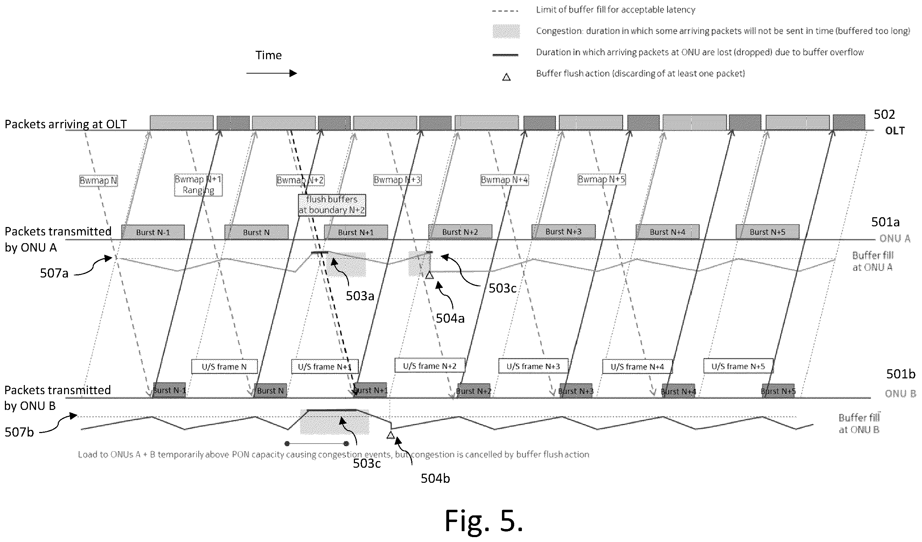

Figure 5 shows, by way of example, a chart showing the effect of discarding one or more packets at an ONU 501a and an ONU 501b (buffer flush) when there is temporary upstream congestion in the network. In this example, packets are dropped at ONU 501a and at ONU 501b at a time before Burst N+2 being transmitted from ONU 501a to OLT 502 (see 504a and 504b).

As can be seen from Figure 5, before packets are discarded, the buffer fills of the ONUs 501a-b are saturating (see 503a-c and limit 507a-b). As can be seen from the buffer fills of ONU 501a and ONU 501b when compared with the buffer fills of ONU 401a and ONU 401b in Figure 4, the buffers are less filled after packets are dropped at 504a and 504b, meaning that packets stored in the buffer are being sent (when resources are available) with a comparative lower delay. Furthermore, in this example, after the packet discard event, the buffers of ONU 501a and 501b do not saturate again (in the time shown), where in Figure 4, the buffers of ONU 401a and ONU 401b continue to periodically saturate due to the high amount of packets being buffered, leading to excessive delay or the dropping of newly arriving packets.

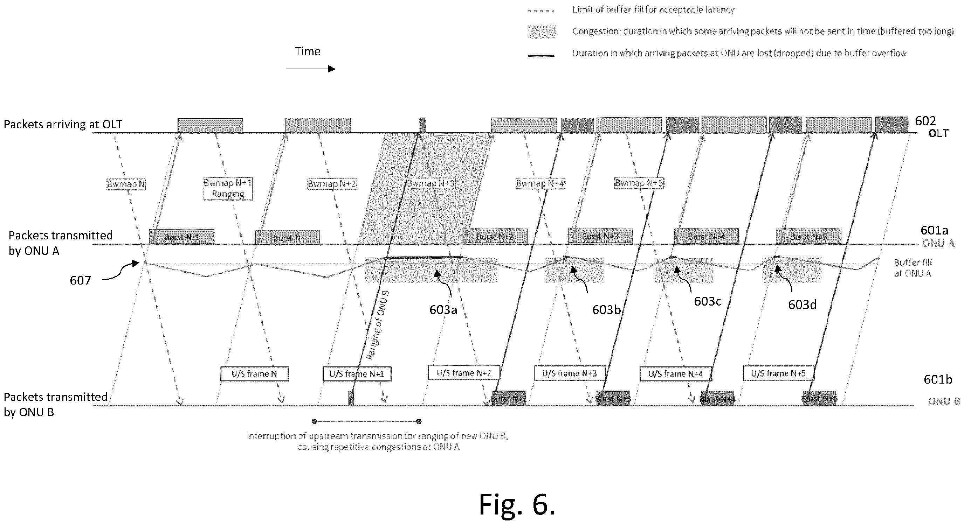

Figure 6 shows, by way of example, a chart showing a scenario wherein there is an interruption in the ability of a transport unit ONU 601a to send packets upstream due to a PON ranging event. A PON ranging event is a period of time, typically several 100µs, in which no PON upstream bandwidth is allocated to active ONUs (e.g. ONU 601a). This so-called quiet window allows a new ONU (ONU 601b) to activate and allows an OLT to estimate the equalization delay of the newly activated ONU. The duration of the quiet window is typically larger than a packet delay or delay variation tolerated by the service. As can be seen from Figure 6, this could lead to a high buffer fill level at ONU 601a after the ranging event, even leading to the buffer of ONU 601a overflowing at some times (see 603a-d and limit 607), therefore automatically dropping newly received packets.

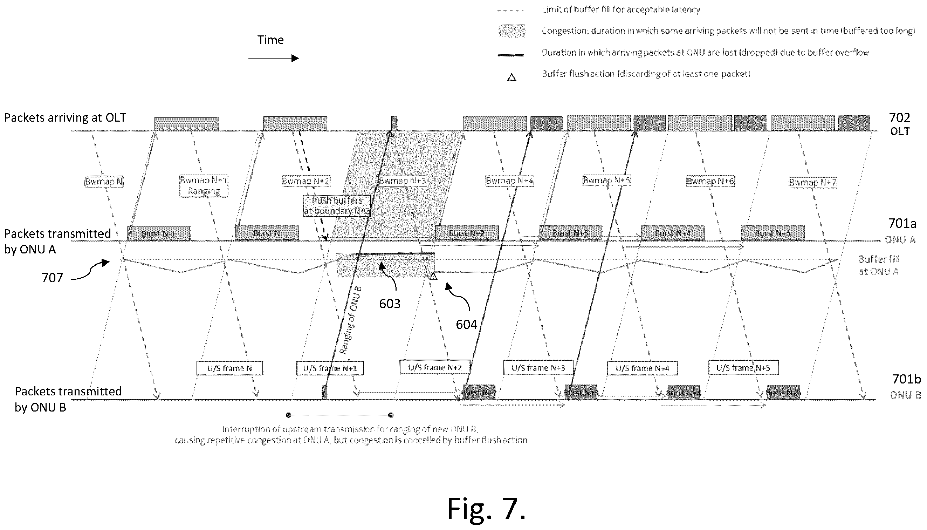

Figure 7, shows, by way of example, a chart showing a scenario wherein there is an interruption in the ability of a transport unit ONU 701a to send packets upstream due to a PON ranging event, wherein packets are dropped by the ONU 701a at a time corresponding to the end of the PON ranging event (see 604). By dropping packets at a time corresponding to the end of the PON ranging event, resources are not wasted after the quiet window on packets that are too old to be processed, and the delay for newly arriving packets at ONU 701a is reduced.

There may be packets from multiple upstream traffic flows arriving at an ONU, each with their own latency and jitter requirements. In the case of mobile fronthaul user-plane data, ultra-reliable-low-latency-communication (URLLC) PUxCH packets are less latency tolerant than enhanced mobile broadband (eMBB) PUxCH packets. Fronthaul packets containing PRACH are relatively latency tolerant. The request to discard packets may therefore apply to PUxCH, but not to PRACH, or a different Tₘₐₓ may be used for each on the same ONU. Similarly, differentiation can be made between a mobile fronthaul user plane flow, a control plane flow or a management plane flow, affecting which packets are discarded. In some implementations, the request to discard at least one packet includes an alloc ID to identify a particular traffic bearing entity in the ONU. The PON Alloc ID is a unique identifier for a traffic bearing entity in the ONU. It is well suited for identifying which queue in which ONU the instruction applies.

In some implementations, the request to discard at least one packet includes a GEM port ID to identify a specific ONU UNI queue. As there is a 1:1 relationship between a particular ONU queue and a GEM port, in the scenario wherein multiple queues in an ONU share the same alloc-ID this provides finer granularity than alloc-ID and allows for the discarding of packets from a specific queue in an ONU.

In some implementations, the request to discard at least one packet includes information on the timing of the execution of the instruction. For instance, the instruction may be immediately executed, or with some delay with respect to a reception time of the instruction, or executed at some time with respect to a particular absolute time, or executed at some time with respect to an event that may occur. For example, where the instruction contains timing information relative to the reception of the instruction, this is useful to trigger the execution near the end of a quiet window, of which the duration is known by the transport node (such as an OLT). In another example, where the instruction may contain an absolute time at which the instruction should be executed, this timing may, for instance, coincide with a frame boundary of a mobile uplink transmission frame or boundary of another time unit that serves as reference for the mobile scheduling decisions.

In some embodiments, the request is given only once, for example, when the traffic bearing entity, i.e. the transport unit (such as an ONU) is established. This may apply when Tₘₐₓ can be statically configured. The ONU is instructed only once (via a request or a configuration action), but continuously monitors the age of packets (T_{life}) and drops those that age beyond Tₘₐₓ. In another example, the single request or configuration contains information on which events should trigger the execution, for example, when a quiet window or long period of absence of upstream allocations is observed by the ONU.

In some embodiments, the request is included in a physical layer operations, administration and maintenance (PLOAM) messaging channel message as part of a downstream framing sublayer (FS)header. The PLOAM messaging channel is well suited to convey such instructions from an OLT (transport node) to an ONU (transport unit). PLOAM messages may be broadcast to instruct many ONUs with a single instruction or can be unicast to instruct a single ONU, and may be sent on a frame basis, typically 125µs in PON.

In some implementations, the request is included in an allocation structure in a bandwidth map. Each downstream physical layer (PHY) frame contains a bandwidth map (BWmap) that indicates the location for an upstream transmission by each ONU in the corresponding upstream PHY frame. This Bwmap contains the start time and grant size for each alloc ID that is granted upstream resources. This field could be expanded with a message that instructs the ONU to drop certain packets (the request). It could be as simple as a single bit that triggers the execution of a packet drop. The type of packet drop itself may also be encoded in the BWmap with additional bits, or the type of packet drop may be configured upfront via PLOAM. In the latter case, there may be a combined use of PLOAM and BWmap, where PLOAM is used to configure the instruction and the BWmap serves as a trigger for the execution of the instruction.

In some embodiments, the request is included in an operation control body in a physical synchronization block. The operation control (OC) structure in the downstream physical synchronization block (PSBd) is used to convey global and static parameters that are useful in the configuration of ONUs, such as selection of a TC layer, and a FEC configuration. In some implementations, Tₘₐₓ or Tₗᵢₘᵢₜ could be an additional global static parameter.

A CTI between a mobile scheduler in a DU and a PON scheduler in an OLT (for instance, scheduler 203 or CTI server 303) can be used to carry information about per-RU bandwidth needs. CTI has been defined by O-RAN in specification documents (O-RAN-CTI-TM and O-RAN-CTI-TC documents). In some implementations, this may be extended to allow the DU to indicate to the OLT the desire to have packets dropped from the ONU buffers. This can be added to either or both of the following: via a CTI configuration i.e. management objects configured in the mobile and transport OSS (useful mainly for static configuration), or via CTI messages from DU to OLT (useful mainly for real-time configuration or for providing the trigger to drop packets). For instance, the CTI report can be extended with a new type of CTI Report Body type.

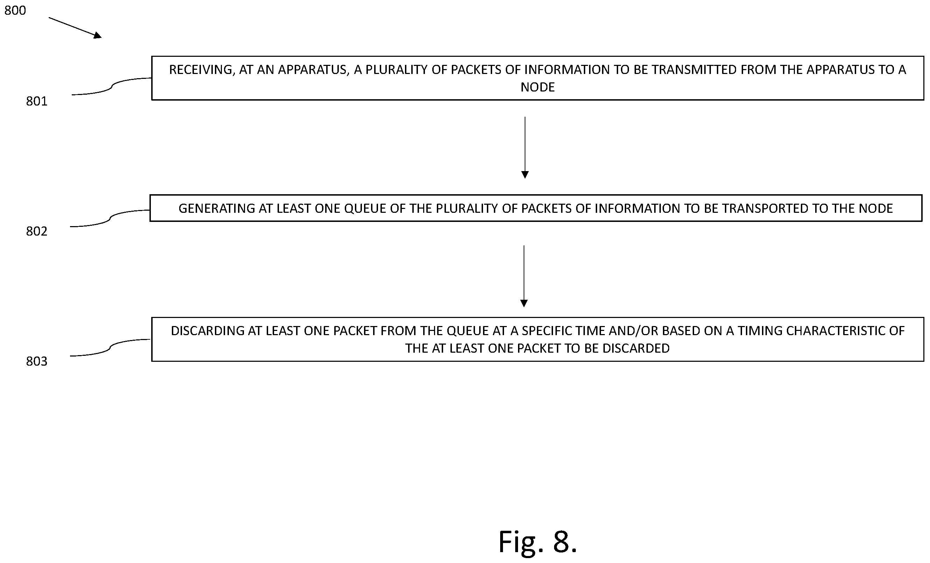

Figure 8 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 800 comprises a first operation 801 of receiving, at the apparatus, a plurality of packets of information to be transmitted from the apparatus to a node.

The method 800 comprises a second operation 802 of generating at least one queue of the plurality of packets of information to be transported to the node.

The method 800 comprises a third operation 803 discarding at least one packet from the queue at a specific time and/or based on a timing characteristic of the at least one packet to be discarded. The timing characteristic may be at least one of a lifetime parameter, T_{life} or ingress timestamp parameter, T_{ingress} as discussed herein.

The method 800 may optionally comprise receiving, at the apparatus from the node, a request to initiate the discarding of the at least one packet from the queue.

The method 800 may optionally comprise transmitting, to the node from the apparatus, a status report on the queue.

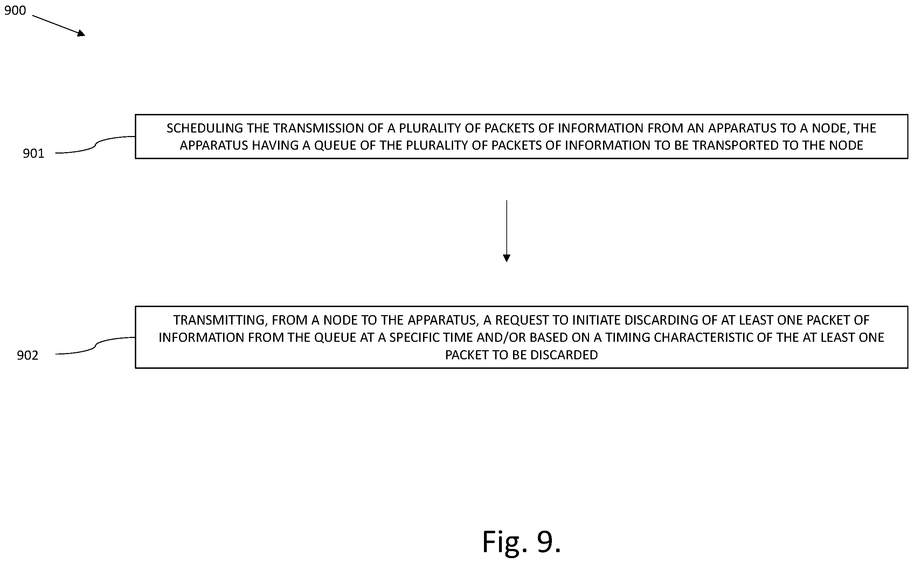

Figure 9 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 900 comprises a first operation 901 of scheduling the transmission of a plurality of packets of information from an apparatus to the node, the apparatus having a queue of the plurality of packets of information to be transported to the node.

The method 900 comprises a second operation 902 of transmitting, from a node to the apparatus, a request to initiate discarding of at least one packet of information from the queue at a specific time and/or based on a timing characteristic of the at least one packet to be discarded.

The method 900 may further comprise receiving from a second node a secondary command. The secondary command message comprises a protocol message comprising at least one of the following; an absolute time at which to discard the at least one packet from the queue, the predetermined maximum lifetime, Tₘₐₓ, or the predetermined limit ingress time, Tiimit.

The apparatus may comprise an ONU and the node may comprise an OLT as discussed herein. Feasibly the apparatus may also be any other type of generic node or apparatus within the field of telecommunications.

### Example Apparatus

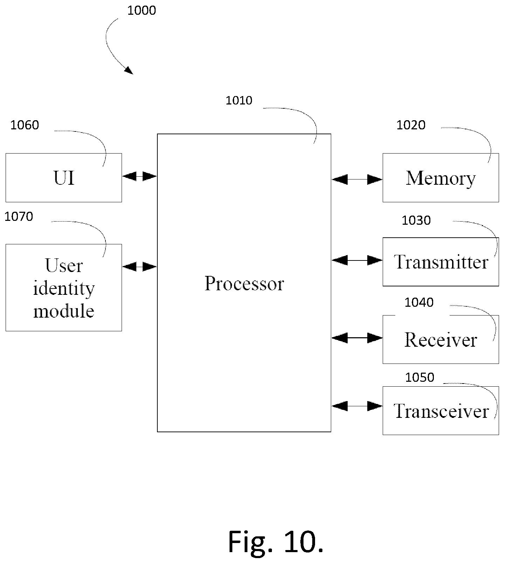

Figure 10 shows, by way of example, a block diagram of an apparatus capable of performing the method(s) as disclosed herein. Illustrated is device 1000, which may comprise, for example, a mobile communication device such as mobile 100 of Figure 1. Comprised in device 1000 is processor 1010, which may comprise, for example, a single- or multi-core processor wherein a single-core processor comprises one processing core and a multi-core processor comprises more than one processing core. Processor 1010 may comprise, in general, a control device. Processor 1010 may comprise more than one processor. Processor 1010 may be a control device. A processing core may comprise, for example, a Cortex-A8 processing core manufactured by ARM Holdings or a Steamroller processing core designed by Advanced Micro Devices Corporation. Processor 1010 may comprise at least one Qualcomm Snapdragon and/or Intel Atom processor. Processor 1010 may comprise at least one application-specific integrated circuit, ASIC. Processor 1010 may comprise at least one field-programmable gate array, FPGA. Processor 1010 may be means for performing method steps in device 1000. Processor 1010 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 1000 may comprise memory 1020. Memory 1020 may comprise random-access memory and/or permanent memory. Memory 1020 may comprise at least one RAM chip. Memory 1020 may comprise solid-state, magnetic, optical and/or holographic memory, for example. Memory 1020 may be at least in part accessible to processor 1010. Memory 1020 may be at least in part comprised in processor 1010. Memory 1020 may be means for storing information. Memory 1020 may comprise computer instructions that processor 1010 is configured to execute. When computer instructions configured to cause processor 1010 to perform certain actions are stored in memory 1020, and device 1000 overall is configured to run under the direction of processor 1010 using computer instructions from memory 1020, processor 1010 and/or its at least one processing core may be considered to be configured to perform said certain actions. Memory 1020 may be at least in part external to device 1000 but accessible to device 1000.

Device 1000 may comprise a transmitter 1030. Device 1000 may comprise a receiver 1040. Transmitter 1030 and receiver 1040 may be configured to transmit and receive, respectively, information in accordance with at least one cellular or non-cellular standard. Transmitter 1030 may comprise more than one transmitter. Receiver 1040 may comprise more than one receiver. Transmitter 1030 and/or receiver 1040 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 1000 may comprise a near-field communication, NFC, transceiver 1050. NFC transceiver 1050 may support at least one NFC technology, such as NFC, Bluetooth, Wibree or similar technologies.

Device 1000 may comprise user interface, UI, 1060. UI 1060 may comprise at least one of a display, a keyboard, a touchscreen, a vibrator arranged to signal to a user by causing device 1000 to vibrate, a speaker and a microphone. A user may be able to operate device 1000 via UI 1060, for example to accept incoming telephone calls, to originate telephone calls or video calls, to browse the Internet, to manage digital files stored in memory 1020 or on a cloud accessible via transmitter 1030 and receiver 1040, or via NFC transceiver 1050, and/or to play games.

Device 1000 may comprise or be arranged to accept a user identity module 1070. User identity module 1070 may comprise, for example, a subscriber identity module, SIM, card installable in device 1000. A user identity module 1070 may comprise information identifying a subscription of a user of device 1000. A user identity module 1070 may comprise cryptographic information usable to verify the identity of a user of device 1000 and/or to facilitate encryption of communicated information and billing of the user of device 1000 for communication effected via device 1000.

Processor 1010 may be furnished with a transmitter arranged to output information from processor 1010, via electrical leads internal to device 1000, to other devices comprised in device 1000. Such a transmitter may comprise a serial bus transmitter arranged to, for example, output information via at least one electrical lead to memory 1020 for storage therein. Alternatively to a serial bus, the transmitter may comprise a parallel bus transmitter. Likewise processor 1010 may comprise a receiver arranged to receive information in processor 1010, via electrical leads internal to device 1000, from other devices comprised in device 1000. Such a receiver may comprise a serial bus receiver arranged to, for example, receive information via at least one electrical lead from receiver 1040 for processing in processor 1010. Alternatively to a serial bus, the receiver may comprise a parallel bus receiver.

Processor 1010, memory 1020, transmitter 1030, receiver 1040, NFC transceiver 1050, UI 1060 and/or user identity module 1070 may be interconnected by electrical leads internal to device 1000 in a multitude of different ways. For example, each of the aforementioned devices may be separately connected to a master bus internal to device 1000, to allow for the devices to exchange information. However, as the skilled person will appreciate, this is only one example and depending on the embodiment various ways of interconnecting at least two of the aforementioned devices may be selected.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above-described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, the apparatus comprising:
means for receiving, at the apparatus, a plurality of packets of information to be transmitted from the apparatus to a node;
means for generating at least one queue of the plurality of packets of information to be transported to the node;
means for discarding at least one packet from the queue at a specific time and/or based on a timing characteristic of the at least one packet to be discarded.

2. The apparatus of claim 1, further comprising:
means for receiving, at the apparatus from the node, a request to initiate the discarding of the at least one packet from the queue.

3. The apparatus of any preceding claim, further comprising:
means for transmitting, to the node from the apparatus, a status report on the queue.

4. A node, comprising:
means for scheduling the transmission of a plurality of packets of information from an apparatus to the node, the apparatus having a queue of the plurality of packets of information to be transported to the node;
means for transmitting, from a node to the apparatus, a request to initiate discarding of at least one packet of information from the queue at a specific time and/or based on a timing characteristic of the at least one packet to be discarded.

5. The apparatus or node of any preceding claim, wherein all of the plurality of packets of information are discarded from the queue.

6. The apparatus or node of any preceding claim, wherein each of the packets of information in the queue are associated with a lifetime parameter, T_{life}, the lifetime parameter indicating the duration since each packet of information was received by the apparatus, and wherein the at least one packet to be discarded has a lifetime parameter greater than a predetermined maximum lifetime, Tₘₐₓ.

7. The apparatus or node of claim 6, wherein the predetermined maximum lifetime, Tₘₐₓ, is determined based on processing and buffering capabilities of the apparatus and node and/or is determined based on requirements of a unit connected to the transport node.

8. The apparatus or node of any preceding claim, wherein each packet of information in the queue is associated with an ingress timestamp parameter, T_{ingress}, indicating the absolute time at which the packet of information was received by the apparatus, and wherein the at least one packet to be discarded has an ingress timestamp parameter earlier than a predetermined limit ingress time, Tₗᵢₘᵢₜ.

9. The apparatus or node of any preceding claim, wherein the apparatus comprises an optical network unit, ONU and the node comprises an optical line terminal, OLT.

10. The apparatus or node of any of claims 2 to 9, wherein the request comprises the predetermined maximum lifetime, Tₘₐₓ, or the predetermined limit ingress time, Tₗᵢₘᵢₜ.

11. The apparatus or node of claims 2 to 10, wherein the request comprises a command to execute the discarding of the at least one packet from the queue at one of the following times:
immediately;
at an absolute time;
at time duration after the request is received by the apparatus; or
at some event detected by the apparatus.

12. The apparatus or node of claims 2 to 11, wherein the request comprises a command to execute the discarding of the at least one packet from the queue upon the identification, by the apparatus or node, of a reference event.

13. The node of any of claims 4 to 12, further comprising means for receiving from a second node a secondary command, wherein the secondary command comprises a protocol message comprising at least one of the following:
at an absolute time at which to discard the at least one packet from the queue;
the predetermined maximum lifetime, Tₘₐₓ; or
the predetermined limit ingress time, Tₗᵢₘᵢₜ.

14. A method, comprising:
receiving, at an apparatus, a plurality of packets of information to be transmitted from the apparatus to a node;
generating at least one queue of the plurality of packets of information to be transported to the node;
discarding at least one packet from the queue at a specific time and/or based on a timing characteristic of the at least one packet to be discarded.

15. A method, comprising:
scheduling the transmission of a plurality of packets of information from an apparatus to a node, the apparatus having a queue of the plurality of packets of information to be transported to the node;
transmitting, from a node to the apparatus, a request to initiate discarding of at least one packet of information from the queue at a specific time and/or based on a timing characteristic of the at least one packet to be discarded.
